(19) Europäisches Patentamt
European Patent Office
Office européen des brevets

(11) **EP 3 207 352 B1**

(12) **EUROPEAN PATENT SPECIFICATION**

(45) Date of publication and mention
of the grant of the patent:
**05.04.2023   Bulletin 2023/14**

(21) Application number: **14790448.6**

(22) Date of filing: **14.10.2014**

(51) International Patent Classification (IPC):
**G01N 11/00** *(2006.01)*       **G01N 11/02** *(2006.01)*

(52) Cooperative Patent Classification (CPC):
**G01N 11/00; C03B 23/047; C03B 37/01242;
G01N 11/02;** G01N 2011/006

(86) International application number:
**PCT/US2014/060403**

(87) International publication number:
**WO 2016/060646 (21.04.2016 Gazette 2016/16)**

(54) **APPARATUS AND METHOD FOR PREFORM OR TUBE DRAWING BASED ON ITS VISCOSITY**

VORRICHTUNG UND VERFAHREN ZUM VORFORM- ODER ROHRZIEHEN AUF GRUNDLAGE
SEINER VISKOSITÄT

APPAREIL ET PROCÉDÉ POUR ÉTIRAGE DE TUBE OU PRÉFORME EN FONCTION DE SA
VISCOSITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2017   Bulletin 2017/34**

(73) Proprietor: **Heraeus Quartz North America LLC
Buford, GA 30518 (US)**

(72) Inventors:
• **FATTAL, Georges, Levon
  Suwanee, GA 30024 (US)**
• **BEAVERS, James E. Jr.
  Flowery Branch, GA 30542 (US)**
• **CHANG, Kai Huei
  Decatur, GA 30030 (US)**
• **GREEN, Evan, P.
  Lawrenceville, GA 30043 (US)**
• **MA, Qiulin
  Alpharetta, Georgia 30022 (US)**

(74) Representative: **Staudt, Armin Walter
Sandeldamm 24a
63450 Hanau (DE)**

(56) References cited:
JP-A- 2005 314 118      US-A- 3 239 325
US-A- 4 389 574         US-A- 4 553 994
US-A- 4 877 436         US-A- 5 079 433
US-A1- 2001 038 740     US-A1- 2005 089 288
US-A1- 2005 128 481     US-A1- 2005 162 640
US-A1- 2006 147 163

**Description**

TECHNICAL FIELD

The invention relates generally to fabricating glass preforms or tubes.

BACKGROUND

Optical preforms, quartz glass tubes, or rods are produced by introducing a quartz glass component (e.g., a cylinder, an ingot, or an uncollapsed rod-in-cylinder (RICs) assembly with core rods inserted inside the cylinder) into a heating zone in a vertical orientation such that the lower end begins to soften and form a strand. The strand is then placed in a pulling device, for example a device including one or more sets of pulling wheels. The rate of draw of the strand is controlled by the speed of the pulling wheels, which may apply either a downward or upward force depending on the forming zone temperature or viscosity and the weight of the strand supported by the wheels.

To achieve a repeatable manufacturing process, the viscosity of the quartz glass component in the forming zone (i.e., at or just below the heating zone) must be controlled for a given preform or tube dimension, throughput, and component geometry. This is particularly relevant for preform draw from the uncollapsed RIC assembly because when furnace temperature is either too high or too low (i.e., the glass viscosity either too low or too high), the core rod glass will flow at a different rate than that of the overclad glass which results in a distorted and unacceptable waveguide for optical fiber applications. For example, a change of +/- 10 °C has a significant impact on viscosity when the glass is heated to 2000 °C. Current techniques of controlling the preform or tube draw involve the use of optical pyrometers to measure the glass temperature above the heating zone, below the heating zone, and/or the temperature of the outside surface of the heating element. However, temperature-based methods of controlling preform or tube draw are unreliable as the measured pyrometer temperature can vary greatly due to variances such as differences in sighting the pyrometer, obstructions on the pyrometer tube, cleanliness of the pyrometer lens, or calibration and drift of the sensor itself. Because viscosity has an exponential relationship with temperature (e.g., in some cases a 30 °C change in temperature can result in a 200% change in viscosity), even small errors in measured temperature lead to large differences in the viscosity and therefore forming behavior. Accordingly, a new method of determining the effective viscosity and therefore a more accurate absolute draw temperature and then using it to control preform or tube draw is desirable.

US 2001/038740 A1 discloses a method for making an optical fiber comprising heating a bulk glass component in a heating region, drawing the fiber from the forming region of the bulk glass component. The pulling-out of the fiber is performed by towing means. Measuring means are provided which measure the outer diameter of the fiber. An output of the measuring means is supplied to a controller which controls the whole fiber drawing step by controlling the temperature of the fiber drawing furnace, the supply speed $V_a$ of the preform supply means, the fiber drawing speed $V_b$ of the towing means, the pressure adjusting means and the output by the dynamometer which measures a tension given to the optical fiber.

US 4 553 994 A refers to a method for forming glass fibers by drawing from a pool of molten glass. The glass fibers are pulled out from the pool through a large number of orifices by using a winder. The molten glass is supplied to the orifices under a pressure which is the atmospheric pressure plus the "head pressure" of the molten glass. Each drawn fiber gets its diameter primarily directly beneath the orifices in a forming cone. It is described that the length of the forming cone varies with the viscosity of the glass in the cone, the winder speed and the head pressure. The tension in the filament varies with the viscosity of the glass, and the winder speed. And the throughput issued from a give orifice varies with the viscosity of the glass, the winder speed and the head pressure.

US 2005/089288 A1 discloses a method for drawing an optical fiber from a preform which has open through holes. The upper end of the preform is connected to a dummy pipe which is kept in a chuck. The dummy pipe is adjoined via a pressuring joint to a pressure adjuster that applies pressure to the through holes, controlled by the controller. The preform is heated by the heater of the drawing furnace. At the downstream side of the drawing furnace the outer diameter of the drawn fiber is measured by a measuring device. The fiber is coated in the resin coating unit and the outer diameter of the coated fiber is measured by a measuring device. The coated fiber passes a capstan and a dancer roller, and then it is wound up by a bobbin. The heating temperature is measured, the line speed at the drawing is determined by the rotational speed of the capstan, and the drawing tension is measured by the load of the dancer roller. It is mentioned that the drawing tension can be increased by reducing the heating temperature. That is why reducing the heating temperature increases the viscosity of the preform. And on the other hand, in order to reduce the drawing tension (without changing the line speed) the heating temperature is increased. That is why when the heating temperature is high, the viscosity of the preform is low, and thereby the perform can be drawn by a small power (low drawing tension).

US 5 079 433 A also discloses a method for drawing an optical fiber from a preform, with a focus on the optical fiber tension monitoring. In this context it is described that the fiber tension is related to the viscosity of the glass of the preform, and to the speed with which the fiber is being drawn. Since the viscosity of the glass is a function of temperature, draw tension can be controlled by adjusting the temperature of the furnace.

JP 2005 314118 A discloses a method for drawing an optical fiber from a preform which is delivered by a preform delivery device into a drawing furnace. The preform has a refractive index distribution in the longitudinal direction, the fluctuation of which is measured in advance. During drawing, the drawing tension generated in the glass fiber is measured and controlled based on the longitudinal fluctuation of the refractive index distribution in the preform. The drawing tension is measured either by a load meter attached to a turn pulley on which the optical fiber is hung or it is measured by using birefringence that occurs in light passing through the glass fiber. With respect to the measurement devices the drawing apparatus is equipped in detail with a first outer diameter measuring device, a second outer diameter measuring device, a tension measuring device arranged therebetween, and a load meter which is attached to the center axis of the guide roller and measures the force applied to the guide roller by the tension generated in the optical fiber. The drawing temperature of the glass fiber is adjusted by controlling the furnace temperature of the drawing furnace or the drawing speed of the glass fiber. By controlling the furnace temperature, the viscosity of the optical fiber preform changes and the drawing tension changes. Further, by controlling the drawing speed, the force for pulling the glass fiber changes, and the drawing tension changes.

US 2005/0162640 A1 discloses a method and a device for non-contact monitoring of the tension in an optical fiber during the run-up of the drawing process. The retardation induced by birefringence is measured by means of a polarized light beam incident on the fiber at an angle between about 10° and 25° with respect to the optical axis. It is noted that the heating temperature of the preform and the drawing rate must be in balance so that the fibre can be continuously drawn under uniform conditions which is normally accomplished by continuous on-line monitoring of the tension within the fibre. Furnace temperature may be adjusted to reduce or increase the drawing tension.

US 2005/0128481 A1 refers to a system and method for determining the quality of an optical glass sheet by measuring and analyzing birefringence. The method is a scanning technique in which a birefringence sensor is set to a first optical state and then moved in a direction at a constant velocity over a glass sheet while first power transmission measurements are made at a high data rate. At the end of this move, the birefringence sensor is set to a second optical state and then moved at the same velocity back over the glass sheet, while second power transmission measurements are made. This procedure is repeated the same number of times as there are optical states in the birefringence sensor. A computer then calculates birefringence values using profiles of the power transmission measurements so as to determine the quality of the glass sheet.

## SUMMARY

The invention provides for methods of producing an elongated component of glass including heating a bulk glass component at a forming region at a temperature, drawing a strand from the bulk glass component at the forming region, using a pulling device comprising a motor configured to exert a pulling force on the strand to control the rate at which the strand is drawn from the bulk glass component. The pulling device is configured to exert a pulling force on the strand in both a direction aligned with a gravitational force and a direction opposite the gravitational force, wherein determining the pulling force ($F_p$) applied to the strand by the pulling device comprises: measuring the voltage applied to a motor (305); measuring a torque applied by the motor to wheels; and calculating the pulling force ($F_p$) from the voltage and the torque, or it comprises measuring the output of load cells applied to the pulling device. The method further comprises: determining the mass of the strand based on the cross-sectional area A and the density p and the length L of the strand; calculating a holding force ($F_h$) applied to the strand by the forming region by determining the algebraic sum of the gravitational force $F_g$ and the pulling force $F_p$ applied to the strand, wherein the gravitational force $F_g$ is calculated using the determined mass of the strand. And determining whether the holding force ($F_h$) is equal to a desired holding force ($F_h$) based on a desired viscosity of the forming region; and adjusting the temperature of the heating region if the holding force ($F_h$) is not equal to the desired holding force ($F_h$)..

In a first embodiment, the holding force is calculated by determining the gravitational force applied to the strand, determining the pulling force applied to the strand by the pulling device, and calculating the holding force applied to the strand by the bulk glass component based on the gravitational force and the pulling force. The sum of the holding force, the pulling force, and the gravitational force equals zero (because at a constant draw speed there is no acceleration and therefore the net force on the strand is zero).

In a further option, the holding force is calculated by measuring a stress-induced birefringence in the strand at a point between the heating region and the pulling device, determining an amount of force applied to the strand at the point which corresponds to the measured stress-induced birefringence, and calculating the holding force by correcting the amount of force for a gravitational effect of the weight of the strand between the heating region and the point.

Furthermore, the invention provides an apparatus for producing an elongated component of glass in a fabrication process, wherein the fabrication process comprises heating a bulk glass component, drawing a strand from the bulk glass component, and using a pulling device configured to exert a pulling force on the strand to control the rate at which the strand is drawn. The apparatus comprising: a heating zone for heating the bulk glass component, wherein the forming region is at or immediately below the heating zone; and a system for determining the pulling force applied to the strand by the pulling device. The apparatus is characterized in that the pulling device is configured to exert a pulling force on the strand in both a direction aligned with the gravitational force and a direction opposite the gravitational force, and the apparatus comprises a system for determining the mass of the strand based on the cross-sectional area $A$ and the density $\rho$ and the length $L$ of the strand. The system for determining the force applied to the strand by the pulling device comprises (i) a voltage meter for measuring the voltage applied to a motor of the pulling device, wherein the voltage can be correlated with the force ($F_p$) applied to the strand by the pulling device, or it comprises one or more load cells mounted to the pulling device. The apparatus is further configured to determine a holding force of the strand by determining the algebraic sum of the gravitational force $F_g$ and the pulling force $F_p$ applied to the strand, wherein the gravitational force $F_g$ is calculated using the determined mass of the strand, and wherein, if the holding force $F_h$ deviates from the desired holding force based on the desired viscosity of the forming region. The apparatus is configured to adjust the supplied heat to the heating zone so as to achieve the desired viscosity in the forming region.

BRIEF DESCRIPTION OF THE DRAWINGS

The invention is best understood from the following detailed description when read in connection with the accompanying drawing. It is emphasized that, according to common practice, the various features of the drawing are not to scale. On the contrary, the dimensions of the various features are arbitrarily expanded or reduced for clarity. Included in the drawing are the following figures:

FIG. 1 is a schematic view of an apparatus for forming a glass preform or tube, according to an embodiment of the invention;

FIG. 2 is a diagram depicting the various forces applied to a glass strand formed by the apparatus of FIG. 1; according to an embodiment of the invention; and

FIGS. 3A-3E are a series of graphs depicting how holding force (FIG. 3A), puller force (FIG 3B), strand length (FIG. 3C), glass temperature (FIG. 3D) and draw speed (FIG. 3E) can vary as a function of time during an exemplary preform or tube draw process; according to an embodiment of the invention.

DETAILED DESCRIPTION

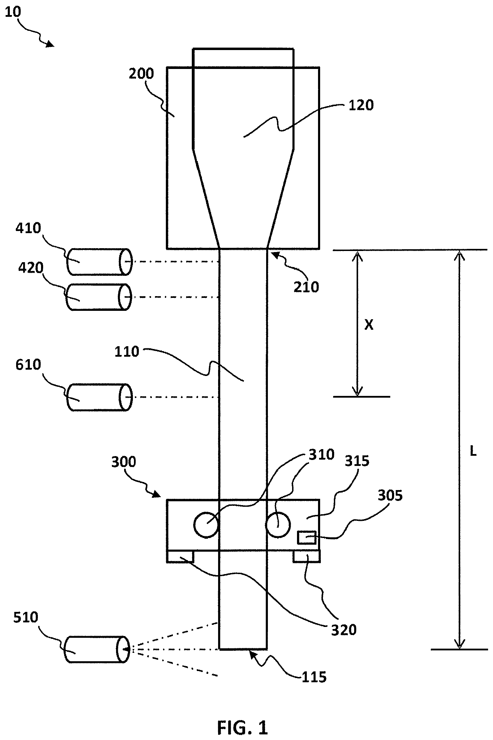

Referring to FIG. 1, an apparatus **10** may be used to form a glass strand **110** from a bulk glass component **120** (e.g., a glass cylinder or ingot). By heating the glass component **120** in a heating zone **200**, the lower end of the glass component **120** will soften and form the strand **110**. The strand **110** may enter a pulling device **300** including a motor **305** driving a plurality of pulling wheels **310**, where the pulling wheels **310** either apply a downward force or an upward force to the strand **110** to control the rate of draw from the glass component **120**. A downward force will increase the rate of draw whereas an upward force will decrease the rate of draw.

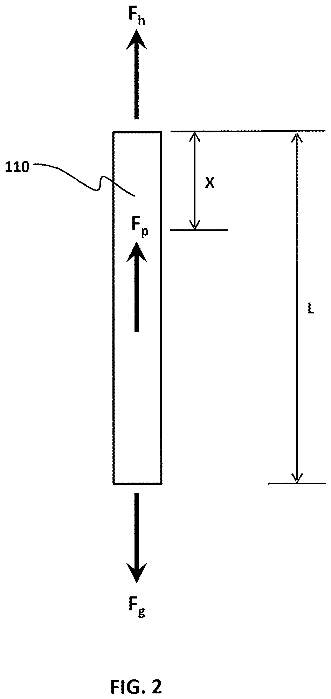

Referring to FIG. 2, embodiments employing the apparatus **10** to determine the viscosity of the forming region **210** by calculating a holding force $F_h$ exerted by the forming region **210** on the glass strand **110**. The holding force $F_h$ at the forming region **210** is predominantly due to the viscosity of the glass with a small and relatively constant contribution from the surface tension of the molten glass. Because of the exponential dependency of viscosity on temperature, even a small absolute temperature change at the forming region may result in a large change in viscosity and subsequently a large change in the holding force $F_h$ as well. Therefore, for preform or tube draw, particularly that for waveguide or optical fiber applications requiring minimum distortion in clad-to-core ratios, controlling the holding force $F_h$ or the effective viscosity at the forming region is a more accurate and sensitive way to achieve high quality and yield in production rather than using the conventional pyrometer-based temperature measurement and controls with its many inaccuracies. If the holding force $F_h$ deviates from the desired holding force based on the desired viscosity of the forming region **210**, the supplied heat to the heating zone may be corrected to achieve the desired viscosity in the forming region **210**.

In order to determine the holding force $F_h$, all the other forces exerted on the glass strand **110** should be considered: namely, a pulling force $F_p$ applied by the pulling device **300** and a gravitational force $F_g$ (i.e., the weight of the strand **110** below the forming region **210**). While the pulling force $F_p$ is depicted in FIG. 2 as an upward force in the same direction as the holding force $F_h$, as discussed above the pulling device **300** may apply either a downward force or an upward force to the strand **110**. Accordingly, it will be understood that, as used in the formulas, $F_p$ is positive when the pulling device **300** applies an upward force to the strand **110** in the opposite direction of the gravitational force $F_g$ and negative when the pulling device **300** applies a downward force to the strand **110** in the same direction of the gravitational force $F_g$ (which is herein a negative number by definition). As the net force applied to the strand **110** is zero because the glass strand is drawn at a constant speed with zero acceleration (formula 1), the holding force may be calculated as the opposite of the algebraic sum of the other forces acting on the strand **110** (formula 2).

$$(1)\ \mathbf{F_h} + \mathbf{F_p} + \mathbf{F_g} = 0$$

$$(2)\ \mathbf{F_h} = -\ (\mathbf{F_g} + \mathbf{F_p})$$

Therefore, the holding force $\mathbf{F_h}$ may be calculated by determining the algebraic sum of the gravitational force $\mathbf{F_g}$ and the pulling force $\mathbf{F_p}$ applied to the strand **110**. By calculating the holding force $\mathbf{F_h}$, the effective viscosity of the forming region **210** may then be determined.

The gravitational force $\mathbf{F_g}$ may be calculated by determining the mass **m** of the strand **110** multiplied by the gravitational constant **g** (e.g., approximately -9.81 m/s$^2$ where the minus sign indicates the downward direction of the gravitational acceleration or force) (formula 4). The mass **m** of the strand **110** is equal to the length **L** of the strand **110** multiplied by its cross-sectional area A multiplied the density $\rho$ of the strand **110** (formula 3).

$$(3)\ \mathbf{m} = \mathbf{L} * \mathbf{A} * \boldsymbol{\rho}$$

$$(4)\ \mathbf{F_g} = \mathbf{m} * \mathbf{g} = \mathbf{L} * \mathbf{A} * \boldsymbol{\rho} * \mathbf{g}$$

The cross-sectional area **A** and the density $\rho$ of the strand **110** are constant and predetermined for the particular process and glass material. In some embodiments, the cross-sectional area **A** may be determined or verified by gauges **410**, **420**. In an exemplary embodiment, the cross-sectional area **A** may range from approximately 1 cm$^2$ to approximately 400 cm$^2$. The density $\rho$ for a silica glass strand is typically approximately 2.2 g/cm$^3$. However, greater and lesser cross-sectional areas and densities are explicitly contemplated, for example for glass strands made of materials other than silica. It is noted that for a tube, the cross-sectional area **A** does not include the hollow interior of the tube (e.g., for a tube with a outside diameter $d_1$ and an inside diameter $d_2$, $\mathbf{A} = \pi\ [(d_1/2)^2-(d_2/2)^2])$. The length **L** of the strand is determined by either measuring the velocity with which the strand **110** is formed, or by using a tracking system **510** (FIG. 1) to determine the position of the end **115** of the strand **110**. The tracking system **510** may include a camera vision system, a laser system, or a mechanical device to determine the vertical position of the end **115** of the strand **110**. While FIG. 2 depicts the tracking system **510** as including only a single component, the tracking system **510** may include multiple components, for example a series of cameras arrayed vertically along the strand **110**.

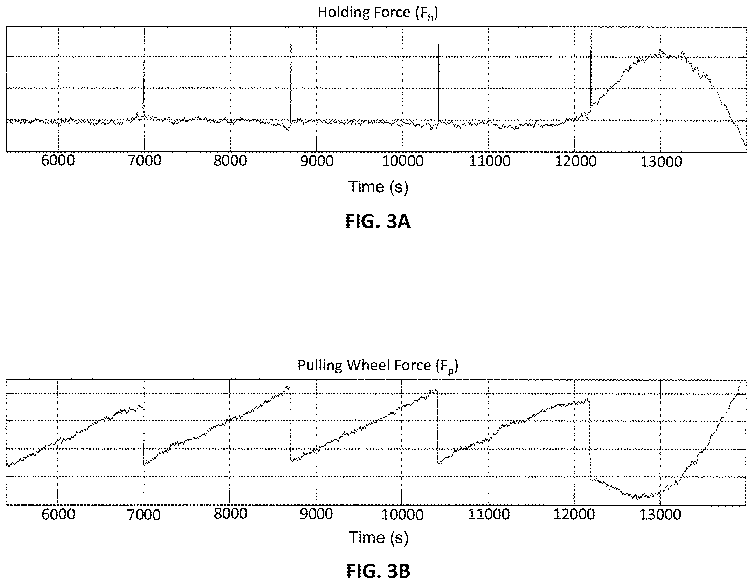

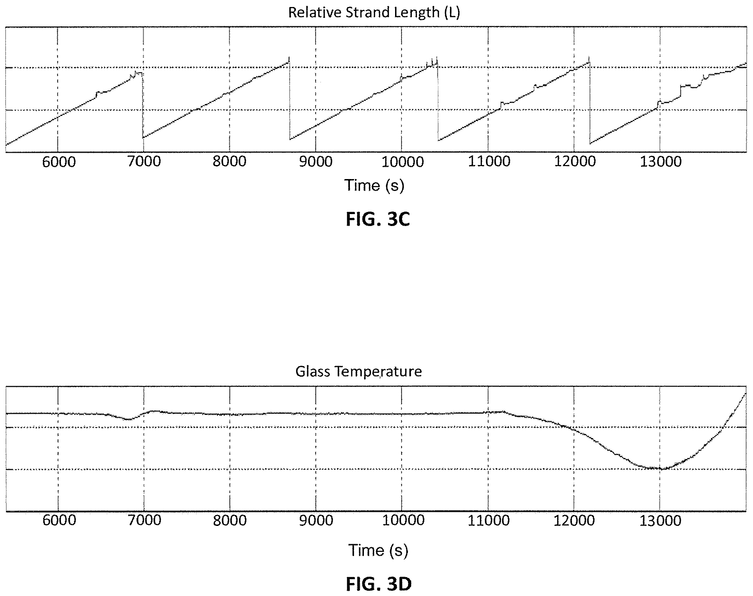

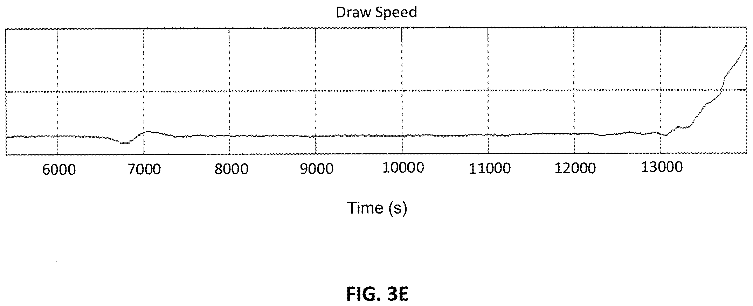

It is to be noted here that in a typical preform or tube draw process, both the length of the glass strand (**L**) and its weight ($\mathbf{F_g}$) increase so that the puller force ($\mathbf{F_p}$) should also be increased in order to maintain the constant draw speed (and zero net force on the glass strand) (i.e., apply a more upward force while the temperature or viscosity dependent holding force $\mathbf{F_h}$ remains constant). The strand **110** may be periodically cut, in which case greater adjustments to the pulling force $\mathbf{F_p}$ are required. FIGS. 3A-3E depict an example of how the holding force ($\mathbf{F_h}$), puller force ($\mathbf{F_p}$), strand length (**L**), glass temperature and draw speed can vary as a function of time during the preform or tube draw process. The saw tooth-like behavior for puller force ($\mathbf{F_p}$) and strand length (**L**) is due to: (a) the increasing length and weight of the strand held by the pullers during draw, (b) the increasing puller force necessary to support it and maintain the constant draw speed, and (c) the periodic cut and removal of the strand **110**.

In one embodiment, the pulling force $\mathbf{F_p}$ is determined by voltage applied to the pulling device **300** and the torque of the pulling wheels **310**. For a given motor, the torque applied by the motor can be determined based on the voltage applied to the motor. From the torque, the pulling force $\mathbf{F_p}$ may be calculated based on the diameter of the pulling wheels **310**, as the magnitude of torque is dependent on both the magnitude of the force and distance between where the torque is measured and where the force is applied. The voltage applied to the pulling device **300** may be measured by a voltage meter attached to the pulling device.

In another embodiment, the pulling force $\mathbf{F_p}$ is determined by measuring the output of load cells **320** mounted directly to the frame **315** of the pulling device **300.** Load cells **320** are transducers that convert a force applied by the pulling wheels **310** to a strain gauge (not shown) of each load cell **320** into an electrical signal. The electrical signal may then be measured and correlated to the force applied to the strain gauge. Exemplary load cells include hydraulic load cells, pneumatic load cells, and strain gauge load cells. The pulling device **300** may include a gripping device such as a chuck or a clamp (not shown) that clamps onto the strand and moves vertically on a tower located under the heating zone **200**. In such embodiments, the pulling force $\mathbf{F_p}$ may be measured by mounting the load cells **320** to the arms or the carriage of the gripping device.

In a preferred embodiment, the holding force $\mathbf{F_h}$ may additionally be determined by measuring stress-induced birefringence within the strand **110.** Stress-induced birefringence refers to the change in the refractive index of a material such as glass when deformed due to mechanical stress. The greater degree of mechanical stress, the greater the change in refractive index. To determine the magnitude of the stress-induced birefringence, a sensor **610** may be positioned at or below the forming zone **210**, for example at a distance **x** between the forming zone **210** and the pulling device **300.** A polarized light source (not shown) may emit a polarized light onto the strand **110** and the degree of transmission through the strand **110** measured by the sensor **610.**

The distance **x** is preferably kept small enough that the strand **110** is still at approximately the annealing temperature when the mechanical tensile stress-induced birefringence is measured. If the distance **x** is too great, the strand **110** will begin to cool from the annealing temperature in the forming zone **210** and thermal and residual stresses caused by the degree of cooling will be introduced into the strand **110** and must be accounted for, greatly complicating the determination of the purely mechanically induced stress from the forces $F_h$, $F_p$, and $F_g$.

As previously discussed, the net force on the strand **110** is zero because the strand is being drawn at constant speed with no acceleration. Accordingly, at each point along the strand, there is an upward force and a downward force with equal magnitude but in opposite directions. The opposing upward and downward forces can results in two situations: (1) tension, where the strand is being pulled at the two ends like in a rope and resulting in positive stress; and (2) compression, where the strand is being pushed at the two ends resulting in negative stress. Whether in tension or in compression, at any point along the strand **110** where the strand **110** is still at approximately the annealing temperature, the magnitude of the measured mechanically-induced stress **S** multiplied by the cross-sectional area of the strand **A** is equal to the magnitude of either the upward force or the downward force applied to the strand at the point:

$$(5)\ |S * A|\ =\ |\text{upward force}|\ =\ |\text{downward force}|$$

For a point between the forming zone **210** and the pulling device **300** at a distance x below the forming zone **210**, the upward force is equal to the holding force $F_h$ minus the weight of the strand above the point, according to formula (6).

$$(6)\ (\text{ upward force })\ =\ F_h - (\text{ strand weight above the point })\ =\ F_h - |x * A * \rho * g|$$

According to the sign conventions described above where g is negative,

$$(7)\ (\text{ upward force })\ =\ F_h + (\ x * A * \rho * g\ ).$$

Because the net force on the strand is zero, the magnitude of the upward force equals the magnitude of the downward force, and formula (7) may be substituted into formula (5) for the upward force, resulting in formula (8). Using formula (8), $F_h$ may be solved for according to formula (9).

$$(8)\ S * A = F_h + (\ x * A * \rho * g\ )$$

$$(9)\ F_h = (\ S * A\ ) - (\ x * A * \rho * g\ )$$

As shown in Formula (8), when x approaches zero the holding force $F_h$ simply becomes $S * A$; otherwise, the holding force $F_h$ will be S * **A** plus the weight of the strand above the point **x** (i.e. $|x * A * \rho * g|$).

Because the amount of stress-induced birefringence resulting from a particular is a known property of the material of the strand **110**, and gravitational effect or correction (i.e., $|x * A * \rho * g|$) is easily determined from all known and essentially constant values (i.e., **x**, **A**, $\rho$, and **g**), the holding force $F_h$ may be deduced by determining the amount of force that results in the measured stress-induced birefringence (i.e., $S * A$). In other words, in this embodiment, the holding force $F_h$ may be determined from the stress within the glass strand at the known distance **x** without the need to measure the continuously changing glass strand length **L** or the pulling force $F_p$ directly.

**Claims**

1. A method of producing an elongated component of glass, said method comprising

heating a bulk glass component (120) in a heating region (200) at a temperature;
drawing a strand (110) from the bulk glass component (120) at a forming region (210) of the bulk glass component (120);
using a pulling device (300) comprising a motor configured to exert a pulling force on the strand to control the rate at which the strand (110) is drawn from the bulk glass component (120);
**characterized in that**
the pulling device (300) is configured to exert a pulling force on the strand in both a direction aligned with a gravitational force and a direction opposite the gravitational force,
wherein determining the pulling force ($F_p$) applied to the strand (110) by the pulling device (300) comprises:

(i) measuring a voltage applied to the motor (305) of the pulling device, measuring a torque applied by the motor (305) to wheels (310); and calculating the pulling force (Fp) from the voltage and the torque, or
(ii) measuring the output of load cells (320) applied to the pulling device (300),

determining the mass of the strand (110) based on the cross-sectional area A and the density p and the length L of the strand (110),
calculating a holding force ($F_h$) applied to the strand (110) by the forming region (210) by determining the algebraic sum of the gravitational force $F_g$ and the pulling force $F_p$ applied to the strand (110), wherein the gravitational force $F_g$ is calculated using the determined mass of the strand (110); and
determining whether the holding force ($F_h$) is equal to a desired holding force ($F_h$) based on a desired viscosity of the forming region (210); and
adjusting the temperature of the heating region (200) if the holding force ($F_h$) is not equal to the desired holding force ($F_h$).

2. The method of claim 1, wherein calculating the holding force ($F_h$) comprises:

determining the gravitational force ($F_g$) applied to the strand (110) by determining a length of the strand (110) and calculating the mass of the strand (110); and
determining the pulling force ($F_p$) applied to the strand (110) by the pulling device (300),
wherein the sum of the holding force ($F_h$), the gravitational force ($F_g$), and the pulling force ($F_p$) equals zero.

3. The method of claim 1, wherein the pulling device (300) includes a gripping device that clamps onto the strand (110) and moves vertically.

4. The method of claim 1, wherein calculating the holding force ($F_h$) comprises:

measuring a stress-induced birefringence in the strand (110) at a point at or below the heating region (200);
determining an amount of force applied to the strand (110) at the point which corresponds to the measured stress-induced birefringence; and
calculating the holding force ($F_h$) by correcting the amount of force ($F_g$) for a gravitational effect of the weight of the strand (110) between the heating region (200) and the point, wherein the correction is zero if the point is at the forming zone (210),

wherein preferably measuring the stress-induced birefringence in the strand (110) comprises:

positioning the strand (110) between a sensor (610) and a polarized light source;
emitting a polarized light from the polarized light source onto the strand (110); and
measuring the degree of transmission of the polarized light through the strand (110) by the sensor (610).

5. An apparatus (10) for producing an elongated component of glass in a fabrication process, wherein the fabrication process comprises heating a bulk glass component (120), drawing a strand (110) from the bulk glass component (120), and using a pulling device (300) configured to exert a pulling force on the strand to control the rate at which the strand (110) is drawn, the apparatus (10) comprising:

a heating zone (200) for heating the bulk glass component (120), wherein the forming region (210) is at or immediately below the heating zone (200); and
a system (305; 320; 310) for determining the pulling force applied to the strand (110) by the pulling device (300);

**characterized in that** the pulling device (300) is configured to exert a pulling force on the strand (110) in both a direction aligned with the gravitational force and a direction opposite the gravitational force, and

the apparatus (10) comprises a system for determining the mass of the strand (110) based on the cross-sectional area **A** and the density $\rho$ and the length **L** of the strand (110), and
wherein the system (305; 320; 310) for determining the force applied to the strand (110) by the pulling device (300) comprises

(i) a voltage meter for measuring the voltage applied to a motor (305) of the pulling device (300), wherein the voltage can be correlated with the force ($F_p$) applied to the strand (110) by the pulling device (300), or
(ii) one or more load cells (320) mounted to the pulling device (300),

and wherein the apparatus is further configured to determine a holding force of the strand by determining the algebraic sum of the gravitational force $F_g$ and the pulling force $F_p$ applied to the strand (110);
wherein the gravitational force $F_g$ is calculated using the determined mass of the strand, and wherein, if the holding force $F_h$ deviates from the desired holding force based on the desired viscosity of the forming region (210), the apparatus is configured to adjust the supplied heat to the heating zone so as to achieve the desired viscosity in the forming region (210).

6. The apparatus of claim 5, wherein the pulling device (300) includes a gripping device (310) that clamps onto the strand (110) and moves vertically.

7. The apparatus of claim 5, wherein the system for determining the weight of the strand (110) comprises a camera vision system, a laser system, or a mechanical device to determine the vertical position of the end of the strand (110).

8. The apparatus of claim 5, wherein the system for determining the weight of the strand (110) comprises a system (510) for measuring the velocity of the strand (110) and determining the length (L) of the strand (110) based on the velocity of the strand (110).

**Patentansprüche**

1. Verfahren zum Herstellen einer länglichen Glaskomponente, das Verfahren umfassend

Erwärmen einer Bulkglaskomponente (120) in einem Erwärmungsbereich (200) auf eine Temperatur;
Ziehen eines Strangs (110) aus der Bulkglaskomponente (120) in einem Verformungsbereich (210) der Bulkglaskomponente (120);
Verwenden einer Ziehvorrichtung (300), umfassend einen Motor, der konfiguriert ist, um eine Zugkraft auf den Strang auszuüben, um die Geschwindigkeit zu steuern, mit der der Strang (110) aus der Bulkglaskomponente (120) gezogen wird;
**dadurch gekennzeichnet, dass**
die Ziehvorrichtung (300) konfiguriert ist, um eine Zugkraft auf den Strang in sowohl einer Richtung, die in Richtung einer Gravitationskraft gerichtet ist, als auch in einer Richtung auszuüben, die der Gravitationskraft entgegengesetzt ist,
wobei ein Bestimmen der Zugkraft ($F_p$), die durch die Ziehvorrichtung (300) auf den Strang (110) ausgeübt wird, umfasst:

(i) Messen einer Spannung, die an den Motor (305) der Ziehvorrichtung angelegt wird, Messen eines Drehmoments, das durch den Motor (305) auf Rollen (310) ausgeübt wird; und Berechnen der Zugkraft ($F_p$) aus der Spannung und dem Drehmoment, oder
(ii) Messen der Ausgabe von Kraftmessdosen (320), die an die Ziehvorrichtung (300) angelegt werden,

Bestimmen der Masse des Strangs (110) basierend auf der Querschnittsfläche A und der Dichte $\rho$ und der Länge L des Strangs (110),
Berechnen einer Rückhaltekraft ($F_h$), die durch den Verformungsbereich (210) auf den Strang (110) ausgeübt wird, durch Bestimmen der algebraischen Summe der Gravitationskraft $F_g$ und der auf den Strang (110) ausgeübten Zugkraft $F_p$, wobei die Gravitationskraft $F_g$ unter Verwendung der bestimmten Masse des Strangs (110) berechnet wird; und

Bestimmen, ob die Rückhaltekraft ($F_h$) gleich einer gewünschten Rückhaltekraft ($F_h$) ist, basierend auf einer gewünschten Viskosität des Verformungsbereichs (210); und

Einstellen der Temperatur des Erwärmungsbereichs (200), falls die Rückhaltekraft ($F_h$) nicht gleich der gewünschten Rückhaltekraft ($F_h$) ist.

2. Verfahren nach Anspruch 1, wobei das Berechnen der Rückhaltekraft ($F_h$) umfasst:

Bestimmen der Gravitationskraft ($F_g$), die auf den Strang (110) ausgeübt wird, durch Bestimmen einer Länge des Strangs (110) und Berechnen der Masse des Strangs (110); und

Bestimmen der Zugkraft ($F_p$), die durch die Ziehvorrichtung (300) auf den Strang (110) ausgeübt wird, wobei die Summe der Rückhaltekraft ($F_h$), der Gravitationskraft ($F_g$) und der Zugkraft ($F_p$) gleich null ist.

3. Verfahren nach Anspruch 1, wobei die Ziehvorrichtung (300) eine Greifvorrichtung einschließt, die sich an den Strang (110) klemmt und vertikal bewegt.

4. Verfahren nach Anspruch 1, wobei das Berechnen der Rückhaltekraft ($F_h$) umfasst:

Messen einer spannungsinduzierten Doppelbrechung in dem Strang (110) an einem Punkt an oder unter dem Erwärmungsbereich (200);

Bestimmen einer Kraftmenge, die auf den Strang (110) an dem Punkt ausgeübt wird, der der gemessenen spannungsinduzierten Doppelbrechung entspricht; und

Berechnen der Rückhaltekraft ($F_h$) durch Korrigieren der Kraftmenge ($F_g$) für eine Gravitationswirkung des Gewichts des Strangs (110) zwischen dem Erwärmungsbereich (200) und dem Punkt, wobei die Korrektur null ist, falls sich der Punkt an der Formungszone (210) befindet,

wobei vorzugsweise das Messen der spannungsinduzierten Doppelbrechung in dem Strang (110) umfasst:

Positionieren des Strangs (110) zwischen einem Sensor (610) und einer polarisierten Lichtquelle;

Emittieren eines polarisierten Lichts aus der polarisierten Lichtquelle auf den Strang (110); und

Messen des Transmissionsgrads des polarisierten Lichts durch den Strang (110) durch den Sensor (610).

5. Einrichtung (10) zum Herstellen einer länglichen Glaskomponente in einem Fertigungsvorgang, wobei der Fertigungsvorgang das Erwärmen einer Bulkglaskomponente (120), das Ziehen eines Strangs (110) aus der Bulkglaskomponente (120) und das Verwenden einer Ziehvorrichtung (300) umfasst, die konfiguriert ist, um eine Zugkraft auf den Strang anzuwenden, um die Geschwindigkeit zu steuern, mit der der Strang (110) gezogen wird, die Einrichtung (10) umfassend:

eine Erwärmungszone (200) zum Erwärmen der Bulkglaskomponente (120), wobei sich der Verformungsbereich (210) an oder unmittelbar unter der Erwärmungszone (200) befindet; und

ein System (305; 320; 310) zum Bestimmen der Zugkraft, die durch die Ziehvorrichtung (300) auf den Strang (110) ausgeübt wird;

**dadurch gekennzeichnet, dass** die Ziehvorrichtung (300) konfiguriert ist, um eine Zugkraft auf den Strang (110) sowohl in einer Richtung, die in Richtung der Gravitationskraft gerichtet ist, als auch einer Richtung auszuüben, die der Gravitationskraft entgegengesetzt ist, und die Einrichtung (10) ein System zum Bestimmen der Masse des Strangs (110) basierend auf der Querschnittsfläche A und der Dichte $\rho$ und der Länge L des Strangs (110) umfasst, und wobei das System (305; 320; 310) zum Bestimmen der Kraft, die auf den Strang (110) durch die Ziehvorrichtung (300) ausgeübt wird, umfasst

(i) einen Spannungsmesser zum Messen der Spannung, die an einen Motor (305) der Ziehvorrichtung (300) angelegt wird, wobei die Spannung mit der Kraft ($F_p$) korreliert werden kann, die durch die Ziehvorrichtung (300) auf den Strang (110) ausgeübt wird,
oder

(ii) eine oder mehrere Kraftmessdosen (320), die an der Ziehvorrichtung (300) montiert sind,

und wobei die Einrichtung ferner konfiguriert ist, um eine Rückhaltekraft des Strangs durch Bestimmen der algebraischen Summe der Gravitationskraft $F_g$ und der Zugkraft $F_p$ zu bestimmen, die auf den Strang (110) ausgeübt wird;

wobei die Gravitationskraft $F_g$ unter Verwendung der bestimmten Masse des Strangs berechnet wird, und wobei, falls die Rückhaltekraft $F_h$ von der gewünschten Rückhaltekraft basierend auf der gewünschten Viskosität des Verformungsbereichs (210) abweicht, die Einrichtung konfiguriert ist, um die an die Erwärmungszone zugeführte Wärme einzustellen, um die gewünschte Viskosität in dem Verformungsbereich (210) zu erreichen.

**6.** Einrichtung nach Anspruch 5, wobei die Ziehvorrichtung (300) eine Greifvorrichtung (310) einschließt, die sich an den Strang (110) klemmt und vertikal bewegt.

**7.** Einrichtung nach Anspruch 5, wobei das System zum Bestimmen des Gewichts des Strangs (110) ein Kamera-Bildverarbeitungssystem, ein Lasersystem oder eine mechanische Vorrichtung umfasst, um die vertikale Position des Endes des Strangs (110) zu bestimmen.

**8.** Einrichtung nach Anspruch 5, wobei das System zum Bestimmen des Gewichts des Strangs (110) ein System (510) zum Messen der Geschwindigkeit des Strangs (110) und Bestimmen der Länge (L) des Strangs (110) basierend auf der Geschwindigkeit des Strangs (110) umfasst.

**Revendications**

**1.** Procédé de production d'un composant de verre allongé, ledit procédé comprenant

le chauffage d'un composant de verre massif (120) dans une région de chauffage (200) à une température ;
l'étirage d'un fil (110) à partir du composant de verre massif (120) au niveau d'une région de formage (210) du composant de verre massif (120) ;
l'utilisation d'un dispositif de traction (300) comprenant un moteur conçu pour exercer une force de traction sur le fil pour commander la vitesse à laquelle le fil (110) est étiré à partir du composant de verre massif (120) ;
**caractérisé en ce que**
le dispositif de traction (300) est conçu pour exercer une force de traction sur le fil à la fois dans une direction alignée sur une force gravitationnelle et une direction opposée à la force gravitationnelle,
dans lequel la détermination de la force de traction ($F_p$) appliquée au fil (110) par le dispositif de traction (300) comprend :

(i) la mesure d'une tension appliquée au moteur (305) du dispositif de traction, la mesure d'un couple appliqué par le moteur (305) à des roues (310) ; et le calcul de la force de traction ($F_p$) à partir de la tension et du couple, ou
(ii) la mesure de la sortie de cellules de charge (320) appliquée au dispositif de traction (300),

la détermination de la masse du fil (110) en fonction de l'aire en coupe transversale A et de la densité $\rho$ et de la longueur L du fil (110),
le calcul d'une force de maintien ($F_h$) appliquée au fil (110) par la région de formage (210) par la détermination de la somme algébrique de la force gravitationnelle $F_g$ et de la force de traction $F_p$ appliquées au fil (110), dans lequel la force gravitationnelle $F_g$ est calculée à l'aide de la masse déterminée du fil (110) ; et
la détermination établissant si la force de maintien ($F_h$) est égale à une force de maintien ($F_h$) souhaitée en fonction d'une viscosité souhaitée de la région de formage (210) ; et
l'ajustement de la température de la région de chauffage (200) si la force de maintien ($F_h$) n'est pas égale à la force de maintien ($F_h$) souhaitée.

**2.** Procédé selon la revendication 1, dans lequel le calcul de la force de maintien ($F_h$) comprend :

la détermination de la force gravitationnelle ($F_g$) appliquée au fil (110) en déterminant une longueur du fil (110) et en calculant la masse du fil (110) ; et
la détermination de la force de traction ($F_p$) appliquée au fil (110) par le dispositif de traction (300),
dans lequel la somme de la force de maintien ($F_h$), de la force gravitationnelle ($F_g$), et de la force de traction ($F_p$) est égale à zéro.

**3.** Procédé selon la revendication 1, dans lequel le dispositif de traction (300) comporte un dispositif de préhension qui se pince sur le fil (110) et se déplace verticalement.

**4.** Procédé selon la revendication 1, dans lequel le calcul de la force de maintien ($F_h$) comprend :

la mesure d'une biréfringence induite par contrainte dans le fil (110) au niveau d'un point au niveau ou en dessous de la région de chauffage (200) ;

la détermination d'une quantité de force appliquée au fil (110) au niveau du point qui correspond à la biréfringence induite par contrainte mesurée ; et

le calcul de la force de maintien ($F_h$) par la correction de la quantité de force ($F_g$) pour un effet gravitationnel du poids du fil (110) entre la région de chauffage (200) et le point, dans lequel la correction est nulle si le point est au niveau de la zone de formage (210),

dans lequel de préférence la mesure de la biréfringence induite par contrainte dans le fil (110) comprend :

le positionnement du fil (110) entre un capteur (610) et une source de lumière polarisée ;

l'émission d'une lumière polarisée de la source de lumière polarisée sur le fil (110) ; et

la mesure du degré de transmission de la lumière polarisée à travers le fil (110) par le capteur (610).

**5.** Appareil (10) pour la production d'un composant de verre allongé dans un procédé de fabrication, dans lequel le procédé de fabrication comprend le chauffage d'un composant de verre massif (120), l'étirage d'un fil (110) du composant de verre massif (120), et l'utilisation d'un dispositif de traction (300) conçu pour exercer une force de traction sur le fil pour commander la vitesse à laquelle le fil (110) est étiré, l'appareil (10) comprenant :

une zone de chauffage (200) pour le chauffage du composant de verre massif (120), dans lequel la région de formage (210) est au niveau ou immédiatement en dessous de la zone de chauffage (200) ; et

un système (305 ; 320 ; 310) pour la détermination de la force de traction appliquée au fil (110) par le dispositif de traction (300) ;

**caractérisé en ce que** le dispositif de traction (300) est conçu pour exercer une force de traction sur le fil (110) à la fois dans une direction alignée sur la force gravitationnelle et une direction opposée à la force gravitationnelle, et

l'appareil (10) comprend un système pour la détermination de la masse du fil (110) en fonction de l'aire en coupe transversale A et de la densité $\rho$ et de la longueur L du fil (110), et dans lequel le système (305 ; 320 ; 310) pour la détermination de la force appliquée au fil (110) par le dispositif de traction (300) comprend

(i) un voltmètre pour la mesure de la tension appliquée à un moteur (305) du dispositif de traction (300), dans lequel la tension peut être corrélée à la force ($F_p$) appliquée au fil (110) par le dispositif de traction (300), ou

(ii) une ou plusieurs cellules de charge (320) montées sur le dispositif de traction (300), et dans lequel l'appareil est en outre conçu pour déterminer une force de maintien du fil par la détermination de la somme algébrique de la force gravitationnelle $F_g$ et de la force de traction $F_p$ appliquées au fil (110) ;

dans lequel la force gravitationnelle $F_g$ est calculée à l'aide de la masse déterminée du fil, et dans lequel, si la force de maintien $F_h$ s'écarte de la force de maintien souhaitée en fonction de la viscosité souhaitée de la région de formage (210),

l'appareil est conçu pour ajuster la chaleur fournie à la zone de chauffage de manière à obtenir la viscosité souhaitée dans la région de formage (210).

**6.** Appareil selon la revendication 5, dans lequel le dispositif de traction (300) comporte un dispositif de préhension (310) qui se pince sur le fil (110) et se déplace verticalement.

**7.** Appareil selon la revendication 5, dans lequel le système pour la détermination du poids du fil (110) comprend un système de vision par caméra, un système laser, ou un dispositif mécanique pour déterminer la position verticale de l'extrémité du fil (110).

**8.** Appareil selon la revendication 5, dans lequel le système pour la détermination du poids du fil (110) comprend un système (510) pour la mesure de la vitesse du fil (110) et la détermination de la longueur (L) du fil (110) en fonction de la vitesse du fil (110).

FIG. 1

FIG. 2

Holding Force ($F_h$)

Time (s)

**FIG. 3A**

Pulling Wheel Force ($F_p$)

Time (s)

**FIG. 3B**

FIG. 3C

FIG. 3D

FIG. 3E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001038740 A1
- US 4553994 A
- US 2005089288 A1
- US 5079433 A
- JP 2005314118 A
- US 20050162640 A1
- US 20050128481 A1